# EUROPÄISCHE PATENTANMELDUNG

(11) **EP 1 065 382 A2**
(43) Veröffentlichungstag der Anmeldung: **03.01.2001**
(21) Anmeldenummer: 00110424.9
(22) Anmeldetag: 16.05.2000
(51) Int. Cl.: F04C 2/08, F04C 2/14

(54) **Ölpumpenzahnrad aus Aluminiumpulver**

(30) Priorität: 29.06.1999 DE 19929952
(71) Anmelder: DaimlerChrysler AG, 70567 Stuttgart (DE)
(72) Erfinder: Hauptmann, Guido, 10627 Berlin (DE); Schäfer, Helmut, 71394 Kernen (DE)

(57) **Zusammenfassung**

Die Erfindung betrifft Ölpumpenzahnräder, die in eine Außenrad-Zahnradpumpe eingesetzt werden, deren Gehäuse aus Aluminium-Druckguß besteht. Um die durch Ölrückfluß zwischen Zahnrädern und Gehäuse bedingten Verluste der Pumpe auch bei höheren Betriebstemperaturen möglichst gering zu halten, muß die Wärmeausdehnung der Zahnräder derjenigen des Gehäuses angepaßt werden. Weiterhin müssen die Zahnräder über eine hohe Festigkeit und gute Gleiteigenschaften verfügen. Daher werden die Ölpumpenzahnräder aus einer pulverförmigen, durch Sprühkompaktieren entstandenen Al/Si-Legierung, der etwa 30 Gewichts% reines Aluminiumpulver beigemischt werden, durch Pressen und anschließendes Sintern gefertigt.

## Beschreibung

Die Erfindung betrifft Ölpumpenzahnräder, die durch Sintern aus einer pulverförmigen Aluminiumlegierung gefertigt sind.

Für die Ölpumpen, die den Motor eines Kraftfahrzeugs mit Öl versorgen, werden häufig Zahnradpumpen verwendet. Um Gewicht zu sparen, werden als Werkstoffe für die Ölpumpen vorzugsweise Leichtmetall-Legierungen eingesetzt. Als Teil des Motors (oder in unmittelbarer Nähe des Motors angeordnet) sind diese Pumpen sehr hohen Temperaturen ausgesetzt. Um die geforderten Dauerleistungen der Pumpe - bei langen Standzeiten und unter starken Temperaturschwankungen - erfüllen zu können, müssen die Zahnräder eine hohe Festigkeit und eine hohe Verschleißresistenz aufweisen, und zwischen gegenüberliegenden Zahnpaaren muß eine hohe Gleitfähigkeit, d.h. geringer Abrieb, gewährleistet sein. Weiterhin müssen die Zahnräder und das Gehäuse der Pumpe ähnliche Wärmeausdehnungskoeffizienten besitzen, um die Verlustleistung der Pumpe - auch bei hohen Temperaturen - möglichst gering zu halten.

Innenzahnradpumpen aus gesinterten pulverförmigen Al/Si-Legierungen für den Einsatz im Automobilbau sind z.B. aus der US 5 199 971 und der US 5 338 168 bekannt. Bei den in diesen Schriften beschriebenen Zahnradpumpen wird der Rotor durch Sintern einer spraykompaktierten Aluminiumlegierung hergestellt, die 5 - 25% Si und Beimengungen aus Fe, Ni und/oder Cr enthält; das Gehäuse wird durch Sintern einer sprühkompaktierten Aluminiumlegierung hergestellt, die 5 bis 25% Si und Beimengungen von Cu, Mg und Mn enthält. Diese Zusammensetzungen sollen einen geringen Verschleiß sowie hohe mechanische Festigkeit auch bei erhöhter Betriebstemperatur gewährleisten. Bei den hier beschriebenen Innenzahnradpumpen soll durch die ähnlichen Zusammensetzungen des Rotors und des Gehäuses eine fast identische thermische Ausdehnung der beiden Komponenten erreicht werden, die die Verluste der Pumpe auch bei höheren Temperaturen gering hält.

Andererseits ist aus der JP 6-65 660 A ein Verfahren bekannt, bei dem durch Heißschmieden eines Gemischs aus Aluminiumpulver und spraykompaktierter Al/Si-Legierung Bauteile mit niedriger thermischer Ausdehnung, hoher Festigkeit und sehr geringem Verschleißeigenschaften herstellbar sein sollen.

Allerdings lassen sich die in der US 5 199 971, der US 5 338 168 und der JP 6-65 660 A beschriebenen Bauteile nicht ohne weiteres als Zahnräder in einer in den Zylinderblock integrierten Außenzahnradpumpe verwenden: In diesem Fall sind nämlich die Zahnräder in einem Pumpengehäuse gelagert, das Teil des gegossenen Zylinderblocks ist und daher aus Aluminium-Druckguß besteht. Die unterschiedliche Werkstoffzusammensetzung von Zahnrädern und Gehäuse bedingt eine unterschiedliche thermische Ausdehnung der Komponenten der Pumpe. Daher verbreitern sich die zwischen Zahnrädern und Gehäusewand gelegenen Ritzen bei höheren Temperaturen, was bei erhöhten Temperaturen zu einem Ölrückfluß und einer Verminderung der bei einer Umdrehung der Zahnräder geförderten Ölmenge führt. Eine solche Pumpe läuft somit insbesondere bei hohen Temperaturen sehr verlustreich und muß auf ein hohes Dauerfördervolumen ausgelegt werden.

Der Erfindung liegt daher die Aufgabe zugrunde, verschleißfeste Ölpumpenzahnräder hoher Festigkeit bereitzustellen, deren thermischer Expansionskoeffizient demjenigen von Gußaluminium angepaßt ist, um eine verlustarme, in den Zylinderblock integrierbare Außenzahnrad-Ölpumpe realisieren zu können.

Die Aufgabe wird erfindungsgemäß durch die Merkmale der Ansprüche 1 und 3 gelöst.

Danach wird der pulverförmigen, durch Sprühkompaktieren hergestellten, Al/Si-Legierung, die den Ausgangsstoff zur Herstellung der Zahnräder darstellt, unlegiertes Aluminiumpulver in einer Beimischung zwischen 25% Gew.- und 35 Gew.-% beigesetzt. Die gründlich gemischten pulverförmigen Komponenten werden zu einem Grünteil des Pumpenzahnrads verpreßt und dann gesintert. Das Sinterteil wird schließlich durch Kalibrieren in die exakte Geometrie des Pumpenzahnrads gebracht.

Durch den erfindungsgemäßen Gehalt an unlegiertem Aluminiumpulver wird der Wärmeausdehnungskoeffizient des Zahnradrohlings (sowie des fertigen Zahnrads) derjenigen des Pumpengehäuses angepaßt, das als Teil des Zylinderblocks aus Aluminium-Druckguß gefertigt ist. Aufgrund der angeglichenen Wärmeausdehnung von Zahnrädern und Gehäuse werden die Pumpenverluste, die durch Rückfluß des Öls durch Spalte zwischen Zahnrädern und Gehäuse entstehen, insbesondere auch bei erhöhten Temperaturen gering gehalten. Somit kann ein höherer Wirkungsgrad der Pumpe mit gleichzeitiger Bauraumreduzierung erreicht werden. Wenngleich die erfindungsgernäße Zumischung von Aluminium auch für die Herstellung von Rotoren/Gehäusen in Innenzahnradpumpen anwendbar ist, bringt sie insbesondere bei Außenzahnradpumpen große Vorteile: In diesem Falle ist das Gehäuse nämlich einem wesentlich weniger starken betriebsbedingten Verschleiß ausgesetzt als die Zahnräder und kann daher aus einem preiswerten, leicht zu verarbeitenden Werkstoff wie Druckguß-Aluminium hergestellt werden; der thermische Ausdehnungskoeffizient der im Gehäuse gelagerten Zahnräder kann dann erfindungsgemäß durch eine entsprechende Zumischung von Aluminiumpulver zum Al/Si-Ausgangsstoff dem thermischen Ausdehnungskoeffizienten des Gehäuses angepaßt werden.

Das als Ausgangsstoff verwendete Al/Si-Legierungspulver wird durch Spraykompaktieren gewonnen. Der Si-Gehalt liegt zweckmäßigerweise zwischen 23% und 28%. Das Legierungspulver kann - neben Aluminium - weiterhin Beimengungen von Mn, Mg, Ni, Cu sowie weiteren (metallischen) Zusätzen enthalten. Bei günstiger Wahl der Prozeßparameter entstehen im Prozeß des Spraykompaktierens intermetallische Verbindungen und Si-Primärkristalle, die eine Größe zwischen 2 µm und 15 µm haben und die eine hohe Verschleißfestigkeit und geringen Abrieb der aus diesem Ausgangsstoff gefertigten Werkstücke sicherstellen (siehe Patentanspruch 2).

Neben der Anpassung der Wärmeausdehnung des Zahnrades an diejenige des Gehäuses bringt die Zugabe von Aluminiumpulver zu der Al/Si-Legierung den zusätzlichen Vorteil einer leichteren Formbarkeit und einer höheren Festigkeit der Zahnräder mit sich: Die weichen, leicht verformbaren Körnchen aus Reinaluminium schmiegen sich während des Verpressens an harte, in dem Al/Si-Legierungspulver enthaltene Kristallkörner an und verringern insbesondere die gegenseitige mechanische Verankerung der in dem Al/Si-Ausgangsstoff enthaltenen Si-Primärkristalle. Das so entstandene, gepreßte Grünteil verfügt daher über eine größere Raumdichte und über eine höhere Festigkeit als ein vergleichbares, ohne Zugabe von Aluminium hergestelltes gepreßtes Grünteil.

Eine besonders hohe Kosteneinsparung bei der Herstellung der erfindungsgemäßen Ölpumpenzahnräder - und ein Beitrag zu einer umweltfreundlichen Produktion - läßt sich erzielen, wenn als Ausgangsstoff ein Al/Si-Legierungspulver verwendet wird, das im Rahmen der Herstellung von Zylinderbuchsen mittels Sprühkompaktieren als Abfallprodukt anfällt (siehe Patentanspruch 3). Die erfindungsgemäße Herstellung von Ölpumpenzahnrädern entspricht somit einem Recycling von Wertstoffen, die als 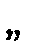 Overspray" der Laufbuchsen-Rohlinge auftreten.

Zur Sicherstellung eine hohen Abriebfestigkeit der Zahnräder ist es zweckmäßig, nach der Kalibrierung der gesinterten Rohlinge die Oberflächenhärte der Zahnflanken zu erhöhen, indem auf den Zahnflanken-Oberflächen durch Abtragen von Aluminium die Si-Primärkristalle freigelegt werden (siehe Patentanspruch 4).

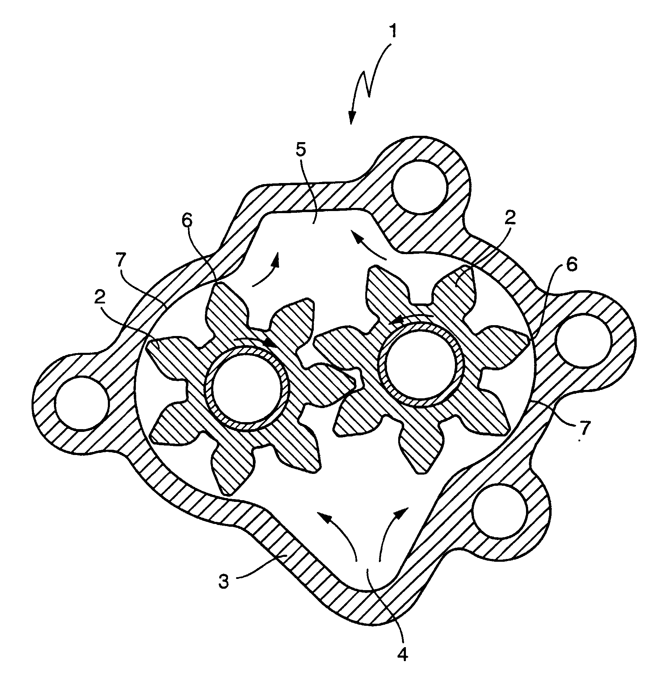

Im folgenden wird die Erfindung anhand eines in der Zeichnung dargestellten Ausführungsbeispieles erläutert.

Die Zeichnung zeigt eine Außenzahnrad-Ölpumpe 1, die zwei erfindungsgemäße Ölpumpenzahnräder 2 enthält. Die Ölpumpe 1 dient zur Ölversorgung eines Kraftfahrzeug-Motors. Das Gehäuse 3 der Ölpumpe 1 besteht aus Aluminium-Druckguß und ist Teil des Zylinderblocks des Motors. Die Ölpumpenzahnräder 2 transportieren das Öl aus dem Saugraum 4 in den Druckraum 5. Hierbei tritt an den Spalten 6 zwischen den Ölpumpenzahnrädern 2 und der Gehäuseinnenwand 7 ein Rückfluß des Öls auf, der umso größer ist, je breiter diese Spalte 6 sind. Um möglichst geringe Rückflußverluste und eine möglichst hohe Effektivität der Ölpumpe 1 zu erreichen, müssen die Spalte 6 also im gesamten Betriebstemperaturbereich der Ölpumpe 1 möglichst klein sein. Hierzu muß die thermische Ausdehnung der Ölpumpenzahnräder 2 möglichst genau an die thermische Ausdehnung des Gehäuses 3 angepaßt werden.

Im vorliegenden Ausführungsbeispiel ist das Ausgangsmaterial zur Herstellung der Ölpumpenzahnräder 2 ein übereutektisches Al/Si-Legierungspulver, das etwa 25 Gewichts-% Si enthält. Das Al/Si-Legierungspulver wird durch ein Sprühkompaktierungsverfahren gewonnen. Hierbei werden die in einer Schmelze vorliegenden Bestandteile mit Hilfe einer Sprühvorrichtung unter einer Schutzgasatmosphäre zu feinen Tröpfchen verpulvert.

Als Ausgangsmaterial zur Herstellung der Ölpumpenzahnräder 2 kann insbesondere ein Al/Si-Legierungspulver verwendet werden, das als Abfall in Form von Overspray bei der Herstellung von Zylinderlaufbuchsen durch Sprühkompaktieren anfällt. Die Korngröße dieses Al/Si-Legierungspulvers liegt bei etwa 150 µm. Die in dem Al/Si-Legierungspulver enthaltenen Si-Primärkristalle haben einen mittleren Körnchendurchmesser zwischen 2 µm und 15 µm und sind in eine Matrix aus einer Aluminium-Legierung eingebettet.

Das Al/Si-Legierungspulver wird mit etwa 30% reinem Aluminiumpulver versetzt und zu Grünkörpern der Ölpumpenzahnräder verpreßt. Dies erfolgt durch Kaltpressen bei Raumtemperatur oder alternativ durch Warmpressen bei Temperaturen bis zu 150 Grad C. Hierbei wird das zu verpressende Pulvergemisch zweckmäßigerweise unter einer Schutzgasatmosphäre gehalten. Weiterhin erweist es sich als zweckmäßig, das Gemisch aus Aluminiumpulver und Al/Si-Legierungspulver zusätzlich mit einem Gleitmittel zu versetzen, das die Bildung einer Oxidhaut auf der Oberfläche der Aluminiumkörner verhindert und ein leichteres Gleiten der Aluminiumkörner gewährleistet. Während des Preßvorgangs schmiegen sich die Aluminiumkörnchen an die Al/Si-Legierungskörner an, füllen die Zwischenräume zwischen den Legierungskörnern aus tragen somit dazu bei, daß beim Pressen ein Grünkörper hoher Dichte erreicht wird. Die Restporosität des fertig verpreßten Grünkörpers beträgt zwischen 5% und 10%.

Der Grünkörper wird anschließend gesintert, um die Festigkeit des Ölpumpenzahnrades weiter zu erhöhen. Die Sintertemperatur liegt etwa bei 500 Grad C und ist so gewählt, daß das Material des Ölpumpenzahnrads eine breiige Konsistenz annimmt, die sprühkompaktierte Körnchenstruktur jedoch nicht zerstört wird. Dann wird das Ölpumpenzahnrad kalibriert, um eine hochgenaue Dimensionierung der kritischen Größen des Zahnrads (Durchmesser, Breite und Zahnform) zu erreichen. Abschließend wird auf der Oberfläche der Ölpumpenzahnräder das Aluminium abgetragen, wodurch die Si-Primärkristalle freigelegt und die Reibeigenschaften der Zahnräder verbessert werden. Die so entstandenen Ölpumpenzahnräder 2 werden schließlich in das Pumpengehäuse 3 eingesetzt.

Durch die oben beschriebene Beigabe des Aluminiumpulvers zum Al/Si-Pulver als Ausgangsmaterial werden Ölpumpenzahnräder 2 erzeugt, deren thermischer Expansionskoeffizient demjenigen von Aluminium-Druckguß sehr nahe kommt. Somit erfahren die Ölpumpenzahnräder 2 im Betrieb der Ölpumpe 1 eine ähnliche Wärmeausdehnung wie das Gehäuse 3, und die Spalte 6 zwischen Zahnrädern 2 und Gehäuse 3, deren Minimalwert für eine Tiefsttemperatur von -40 Grad C ausgelegt ist, sind auch bei hohen Betriebstemperaturen von bis zu 120 Grad C so klein, daß nur geringe Rückflußverluste auftreten.

## Patentansprüche

1. Ölpumpenzahnrad aus einer pulverförmigen, durch Sprühkompaktieren hergestellten, übereutektischen Al/Si-Legierung, wobei das Ölpumpenzahnrad durch Verpressen und anschließendes Sintern des Al/Si-Legierungspulvers gebildet ist,
**dadurch gekennzeichnet**,
daß das Ausgangsmaterial des Ölpumpenzahnrads (2) neben dem Al/Si-Legierungspulver 25 bis 35 Gew.-% unlegiertes Aluminiumpulver enthält.

2. Ölpumpenzahnrad nach Anspruch 1,
**dadurch gekennzeichnet**,
- daß das Al/Si-Legierungspulver einen Si-Gehalt zwischen 23 und 28 Gew.-% hat,
- und daß in dem Al/Si-Legierungspulver Si-Primärkristalle mit einem mittleren Korndurchmesser von 2 µm bis 15 µm enthalten sind.

3. Verfahren zur Herstellung eines Ölpumpenzahnrads aus einer pulverförmigen, durch Sprühkompaktieren hergestellten, Aluminiumlegierung,
**dadurch gekennzeichnet**,
- daß als Ausgangsmaterial Al/Si-Legierungspulver verwendet wird, das als Abfallstoff im Rahmen der Herstellung von Zylinderlaufbuchsen gewonnen wird,
- daß diesem Al/Si-Legierungspulver unlegiertes Aluminiumpulver zugemischt wird,
- daß aus diesem Pulvergemisch durch Pressen ein Rohteil des Ölpumpenzahnrads (2) hergestellt wird, und
- daß das Rohteil gesintert wird.

4. Verfahren nach Anspruch 3,
**dadurch gekennzeichnet**,
daß nach dem Sintern des Rohteils durch Abtragen des Aluminiums Si-Primärkristalle auf den Zahnoberflächen freigelegt werden.
